# EUROPEAN PATENT APPLICATION

(11) **EP 4 567 929 A1**
(43) Date of publication of application: **11.06.2025**
(21) Application number: 23383256.7
(22) Date of filing: 05.12.2023
(51) Int. Cl.: H01M 4/38, H01M 4/525, H01M 10/052, H01M 10/0565, H01M 10/0568, H01M 10/0569

(54) **ELECTROCHEMICAL CELL**

(71) Applicant: Basquevolt S.A.U., 01510 Vitoria-Gasteiz, Álava (ES)
(72) Inventor: PISZCZ, Michal, E-01510 Vitoria-Gasteiz, Álava (ES); GIORDANI, Vincent, E-01510 Vitoria-Gasteiz, Álava (ES); MARTÍNEZ-IBÁÑEZ, María, E-01510 Vitoria-Gasteiz, Álava (ES); ARMAND, Michel, E-01510 Vitoria-Gasteiz, Álava (ES); ARRESE-IGOR, Mikel, E-01510 Vitoria-Gasteiz, Álava (ES); MEABE, Leire, E-01510 Vitoria-Gasteiz, Álava (ES); GARCÍA, Lorena, E-01510 Vitoria-Gasteiz, Álava (ES); GOUJON, Nicolas, E-01510 Vitoria-Gasteiz, Álava (ES); VILLAVERDE OREJÓN, Aitor, E-01510 Vitoria-Gasteiz, Álava (ES); LIENDO, Guillermo, E-01510 Vitoria-Gasteiz, Álava (ES); MORANT MIÑANA, Maria Carmen, E-01510 Vitoria-Gasteiz, Álava (ES)
(74) Representative: ABG Intellectual Property Law, S.L.

(57) **Abstract**

The present invention relates to an electrochemical cell comprising lithium as anode material, a nickel-rich NMC material as cathode material and a polymer electrolyte comprising a cross-linked acrylate polymer and a combination of lithium salts comprising lithium ((difluoromethyl)sulfonyl)((trifluormethyl)sulfonyl imide. It also relates to a method for the preparation of such electrochemical cell and to its use as a battery.

## Description

### FIELD OF THE INVENTION

The present invention relates to an electrochemical cell comprising lithium as anode material, a nickel-rich NMC material as cathode material and a polymer electrolyte comprising a cross-linked acrylate polymer and a combination of lithium salts comprising lithium ((difluoromethyl)sulfonyl)((trifluormethyl)sulfonyl imide. It also relates to a method for the preparation of such electrochemical cell and to its use as a battery.

### BACKGROUND

The development of performant batteries is of utmost importance in today's society. In the first place, batteries provide a portable source of electrical power and allow to power a plethora of devices and equipment used on a daily basis, such as smartphones, laptops and electric cars. Batteries are also used to store renewable energy chemically, so that the energy produced by solar or wind energy and cannot be consumed at the moment it is produced can be temporarily stored for its posterior use. Similarly, batteries can be used to stabilize electrical grids by storing excess power during times of low demand and releasing it during peak demand periods, thus reducing the stress applied to the distribution grid and reducing the risks of damaging said grid. These elements are also key components of electric vehicles, for which application batteries having the following features are in demand: high density of energy, fast charging, durability (long life cycle), among others. These aspects of batteries are currently the object of intensive research.

Among the different types of batteries, lithium metal batteries are particularly attractive for applications where high energy density, fast charging, capacity retention and low self-discharge rates are required. These batteries typically comprise an anode comprising lithium metal, a cathode comprising a lithium oxide material and an electrolyte allowing for the exchange of lithium cations between the electrodes. During the discharge of the battery, lithium cations flow from the cathode to the anode through the electrolyte. Conversely, during the charging of the battery, lithium cations flow from the anode to the cathode through the electrolyte. Separators may be used to cover the electrodes and preventing short circuits between the anode and the cathode, while allowing for lithium cations to cross the separator layer.

Thus, intensive research is being carried out in the quest for more performant lithium metal batteries; particularly in the areas related to the development of cathode materials and/or electrolyte materials. In this regard, several cathode materials have thus been reported in the art. In particular, mixed metal oxides of lithium, manganese, cobalt and nickel are known in the art and are often referred to as NMC materials, having the general formula LiNiₓMn_{y}Co_{z}O₂ where the sum of x, y and z is generally about 1. These materials possess a similar structure to lithium cobalt oxide, most traditionally used in Li-ion batteries, combined with an optimal charge distribution over the surface. Several NMC materials are known in the art. These materials exhibit a layered structure, which allows for the intercalation of lithium cations between the layers of the material during discharging of lithium batteries comprising NMC cathodes. This ability confers to these materials the possibility to form electrodes with high energy density.

NMC materials are typically referred to in the art as NMCabc wherein each of a, b and c are integer numbers of from 1 to 9. In this nomenclature, a represents the relative stoichiometry of the nickel in the LiNiₓMn_{y}Co_{z}O₂, b represents the relative stoichiometry of the manganese in the LiNiₓMn_{y}Co_{z}O₂, and c represents the relative stoichiometry of the cobalt in the LiNiₓMn_{y}Co_{z}O₂. Consequently, NMC333 refers to a compound of formula LiNi_{0.33}Mn_{0.33}Co_{0.33}O₂. Similarly, NMC442 refers to a compound of formula LiNi_{0.4}Mn_{0.4}Co_{0.2}O_{2;} NMC532 refers to a compound of formula LiNi_{0.5}Mn_{0.3}Co_{0.2}O_{2;} NMC622refers to a compound of formula LiNi_{0.6}Mn_{0.2}Co_{0.2}O_{2;} and NMC811 refers to a compound of formula LiNi_{0.8}Mn_{0.1}Co_{0.1}O_{2.} NMC9xx is also known in the art and refers to a material of formula LiNi_{0.9}Mn_{y}Co_{z.2} wherein the sum of y and z is equal to 0.1. Other known cathode materials, include for instance, lithium iron phosphate and lithium nickel cobalt aluminium (NCA).

The electrolyte of lithium batteries is also an area of research with high potential of improvement for the performance of lithium metal batteries. Several types of electrolytes are known in the art, such as, for instance, solid electrolytes, liquid electrolytes, solid-state polymer electrolytes and polymer gel electrolytes. Polymer electrolytes are particularly attractive as they present several advantages, including flexibility (e.g. polymers are much less prompt to break when submitted to mechanical stress), safety (e.g. they are much less flammable than solvent-based liquid electrolytes), processability and robustness. Polymer gel electrolytes further have the ability to incorporate solvent molecules, thereby enhancing the transport of ions in the polymer while improving the plasticity of the electrolyte. Polymer gel electrolytes typically include at least a polymer, a lithium salt and a plasticizer or solvent, which components have been the object of independent studies aiming at optimizing the properties of polymer electrolytes in terms of conductivity, electrochemical stability and capacity to preserve the capacity of the battery upon charging.

Polymers suitable for formulating polymer gel electrolytes are known in the art and include in their molecular formula heteroatoms, such as halogen, O, N and S, present on the side chain or the repeating unit(s) of the polymers, thus promoting the transport of lithium cations by electrostatic interactions between the cation and the lone pair of electrons born by these heteroatoms. Examples of such polymers include polyethylene oxide, polyacrylonitrile, polyacrylates, polyvinylidene fluoride, poly vinyl alcohol and polyurethanes.

Different lithium salts have been reported in the art as being useful for the formulation of polymer electrolytes. Bis(trifluoromethane)sulfonimide lithium salt (LiTFSI) is broadly used in the art as component for polymer electrolyte compositions. Zhang and co-workers report in "Enhanced Li-ion conductivity of polymer electrolytes with selective introduction of hydrogen in the anion" Angewandte Chemie Int. Ed. 2019, Vol. 58. Issue 23, 7829-7834, an alternative salt, analogous salts to LiTFSI whereby one or more of the F atoms are replaced with H atoms, in particular a compound of formula (I), also called LiDFTFSI 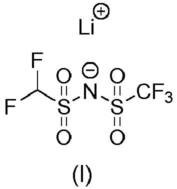 The compound of formula (I) was shown to increase the Li-ion conductivity of electrolytes based on polyethylene oxide if compared with LiTFSI, thus teaching that this compound is useful as component of a polymer electrolyte.

In addition, Qiao L. and co-workers disclose in "Stable non-corrosive sulfonimide salt for 4-V-class lithium metal batteries" Nature Materials 2022, vol. 21, 455-462 an electrolyte composition comprising a mixture of organic carbonates and lithium (difluoromethyl(trifluoromethyl)sulfonamide (LiDFTFSI) as lithium salt. The electrolyte was further placed in a cell having NMC111 as cathode material and AI(0) as current collector. The authors indicate that the use of NMC111 is favoured over other NMC materials having higher nickel contents, such as NMC811.

Zhang, H and co-workers disclose in "Designer Anion Enabling Solid-State Lithium-Sulfur Batteries", Joule, Volume 3, Issue 7, 2019, Pages 1689-1702 polymer electrolyte compositions comprising polyethylene oxide and lithium (difluoromethanesulfonyl)(trifluoromethanesulfonyl)imide (LiDFTFSI) as lithium salt. Said composition was used in a cell employing Li(0) as anode and polysulfide as cathode material. This document further teaches that the salt of the electrolyte forms a passivation layer comprising lithium fluoride and lithium hydride on the Li(0) anode which contributes in improving long-term cyclability of the battery by preventing the formation of lithium dendrites on the anode observed with other lithium salts such as lithium bis(trifluoromethylsulfonyl)imide LiTFSI.

Hongfa Xiang,and co-workers disclose in "Enhanced charging capability of lithium metal batteries based on lithium bis(trifluoromethanesulfonyl)imide-lithium bis(oxalato)borate dual-salt electrolytes", Journal of Power Sources, Volume 318, 2016, Pages 170-177 a liquid electrolyte composition comprising LiTFSI and LiBOB in a solution of carbonates that enhances the performance of batteries comprising lithium nickel cobalt aluminium oxide materials as active material. The authors are however silent about the use of polymer gel electrolytes.

From what is disclosed in the art, it derives that there is still a need for improved lithium metal cell assemblies for battery applications, in particular for flexible, safe and robust cells exhibiting high specific discharge capacity combined with high capacity retention.

### SUMMARY OF THE INVENTION

After exhaustive research, the inventors have developed an electrochemical cell comprising a polymer gel electrolyte which comprises two different lithium salts, one of which is LiDFTFSI, and a cross-linked polyacrylate polymer; the electrochemical cell also comprising a lithium nickel manganese cobalt oxide material of formula LiNiₓMn_{y}Co_{z}O₂ wherein x is from 0.70 to 0.95 and wherein the sum of x, y and z is equal to1, in particular NMC9xx, as cathode active material. The inventors have found that the cathode active material and the polymer electrolyte composition of the cells of the invention surprisingly act synergistically in providing an electrochemical cell which combines the advantages of polymer gel electrolytes, for instance in terms of resistance to mechanical stress, safety, processability and robustness, and improved specific discharge capacity, coulombic efficiency and capacity retention if compared with electrochemical cells comprising only one element out of the electrolyte composition and the cathode active material. This synergistic effect is totally unexpected in view of the prior art. In addition, the use of a specific polymer electrolyte composition comprising a combination of lithium salts in the cells of the invention surprisingly provides batteries which can be operated at high voltages (4.0 - 4.5 V) and are less prompt to be subject to corrosion or electrolyte decomposition than batteries comprising other types of electrolytes. In addition, the use of a specific polymer electrolyte composition provides for an improved compatibility with lithium metal as anode material.

Thus, in a first aspect, the invention relates to an electrochemical cell comprising:
(a) an anode comprising lithium metal;
(b) a cathode comprising a lithium nickel manganese cobalt oxide material of formula LiNiₓMn_{y}Co_{z}O₂ wherein x is from 0.70 to 0.95 and wherein the sum of x, y and z is equal to1; and
(c) a polymer electrolyte arranged for allowing the exchange of lithium cations between the anode and the cathode comprising:
   (i) a first lithium salt of formula (I) 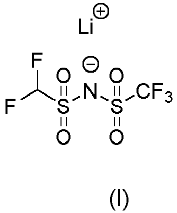
   (ii) a second lithium salt suitable for lithium metal battery electrolytes, and
   (iii) a polymer that is a cross-linked polymer of a monomer of formula (II) or a mixture thereof with a cross-linking agent of formula (III) or a mixture thereof 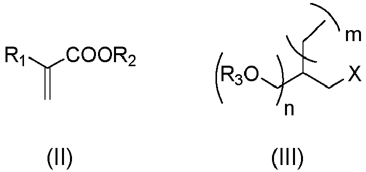 wherein:
      R₁ is selected from the group consisting of hydrogen, methyl and cyano;
      R₂ is a (C₁-C₆)alkyl group or a (C₁-C₆)fluoroalkyl group;
      n is 2 or 3;
      m is 0 or 1;
      the sum of n and m is equal to 3;
      each R₃ represents a group of formula (IV) 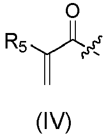
      wherein R₅ is selected from the group consisting of hydrogen, methyl and cyano; and the wavy line represents the attachment point of the group of formula (IV) to an oxygen atom bearing a R₃ group in the compound of formula (III);
      X is selected from methyl, a group of formula -OR₃ and a group of formula -OR₄ with the proviso that X is not a methyl group when m is 1;
      wherein R₄ is a group of formula (V) 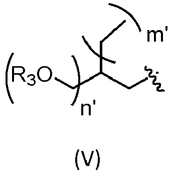
      wherein n' is 2 or 3;
      m' is 0 or 1;
      the sum of n' and m' is equal to 3 and wherein each R₃ represents a radical of formula (IV), the wavy line represents the attachment point of the group of formula (V) to the oxygen atom bearing the R₄ group in the -OR₄ group.

In a second aspect, the invention relates to a method for the preparation of an electrochemical cell according to the first aspect of the invention comprising the steps of:
(i) providing a cathode comprising a lithium nickel manganese cobalt oxide material of formula LiNiₓMn_{y}Co_{z}O₂ as defined in the first aspect of the invention;
(ii) providing an anode comprising lithium metal;
(iii) providing a polymer electrolyte precursor composition comprising:
   (a) a first lithium salt of formula (I) as defined in the first aspect of the invention,
   (b) a second lithium salt suitable for lithium metal battery electrolytes as defined in the first aspect of the invention,
   (c) a polymer precursor composition comprising:
      (c-1) a monomer of formula (II) as defined in the first aspect of the invention or a mixture thereof,
      (c-2) a cross linking agent of formula (III) as defined in the first aspect of the invention or a mixture thereof, and
      (c-3) a free radical initiator;
   (d) optionally, a plasticizer as defined in the first aspect of the invention;
(iv) transferring the polymer electrolyte precursor composition provided in step (iii) on the surface of the cathode provided in step (i) and of the anode provided in step (ii), said surfaces being optionally covered with a separator; in a manner that the electrolyte is arranged between the cathode and the anode such that lithium cations can be exchanged between the cathode and the anode; and
(v) cross-linking the polymer precursor composition of the polymer electrolyte precursor composition transferred in step (iv).

In a third aspect, the invention relates to a battery comprising a plurality of electrochemical cells as defined in the first aspect of the invention.

In a fourth aspect, the invention relates to an electrochemical cell obtainable by the process as defined in the second aspect of the invention.

### BRIEF DESCRIPTION OF THE DRAWINGS

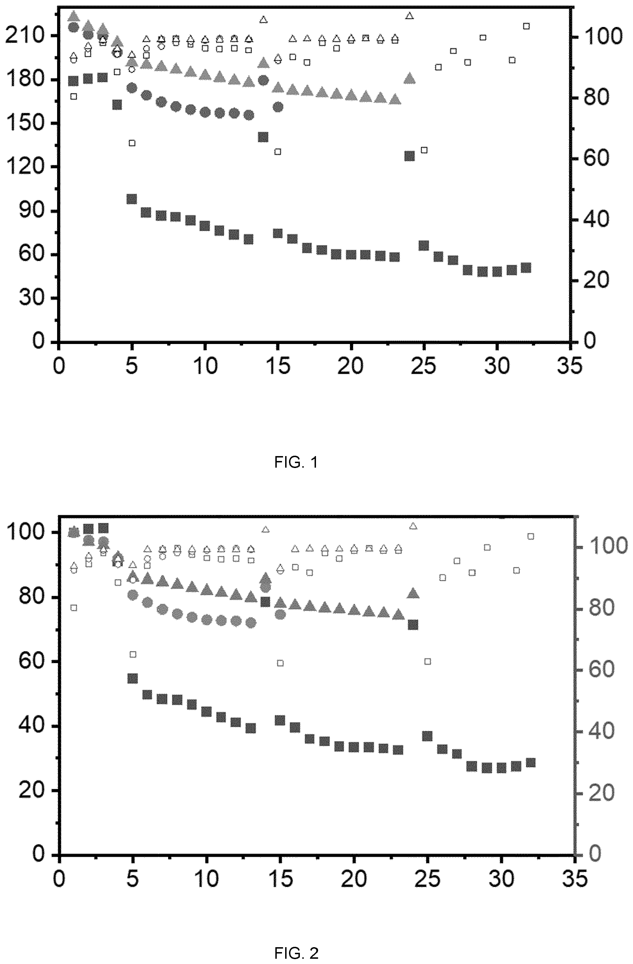

Fig. 1 describes: left y axis: the specific discharge capacity expressed in mAh/g of battery 3 (filled triangles), battery 2 (filled circles) and battery 1 (filled square) as a function of the cycle number; and right y axis: the coulombic efficiency expressed as a percentage of battery 3 (hollow triangles), battery 2 (hollow circles) and battery 1 (hollow squares) as a function of the cycle number, whereby batteries 1-3 are as described in the Examples and using the cycling procedure disclosed in the Examples for batteries 1-3.
Fig. 2 describes left y axis: the capacity retention expressed as a percentage of battery 3 (filled triangles), battery 2 (filled circles) and battery 1 (filled square) as a function of the cycle number; and right y axis: the coulombic efficiency expressed as a percentage of battery 3 (hollow triangles), battery 2 (hollow circles) and battery 1 (hollow squares) as a function of the cycle number.

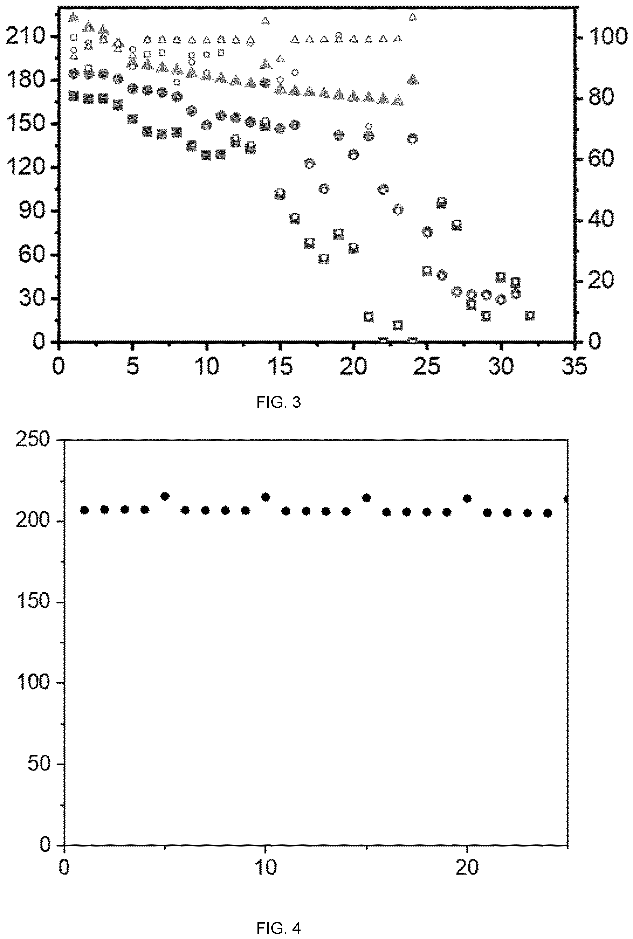

Fig. 3 describes: left y axis: the specific discharge capacity expressed in mAh/g of battery 3 (filled triangles), battery 4 (filled circles) and battery 5 (filled square) as a function of the cycle number; and right y axis: the coulombic efficiency expressed as a percentage of battery 3 (hollow triangles), battery 4 (hollow circles) and battery 5 (hollow squares) as a function of the cycle number, whereby batteries 3, 4 and 5 are as described in the Examples and using the cycling procedure disclosed in the Examples for batteries 3, 4 and 5.
Fig. 4 describes the specific discharge capacity expressed in mAh/g of battery 6 (filled circles) as a function of the cycle number, whereby battery 6 is as described in the Examples and using the cycling procedure disclosed in the Examples for battery 6.

### DETAILED DESCRIPTION

All terms as used herein in this application, unless otherwise stated, shall be understood in their ordinary meaning as known in the art. Other more specific definitions for certain terms as used in the present application are as set forth below and are intended to apply uniformly throughout the specification and claims unless an otherwise expressly set out definition provides a broader definition.

For the purposes of the invention, any ranges given include both the lower and the upper end-points of the range. Ranges given, such as temperatures, times, molar ratio, volume ratio and the like, should be considered approximate (i.e. with a 5% margin of variation around the value of the indicated point), unless specifically stated otherwise.

In the context of the invention, the term "plasticizer" refers to a substance suitable for softening a polymer. Examples of plasticizers are known in the art and include, among others, organic solvents and compounds such as dimethoxy ethane (DME), 1,2-Diethoxyethane (DEE), 1,3-Dioxolane (DOL), Diethyleneglycol dimethyl ether (DEGDME), Triethylene glycol dimethyl ether (G3), tetraethylene glycol dimethyl ether (TEGDME), Poly(ethylene glycol) dimethyl ether (PEGDME), tetrahydropyran (THP), γ-butyrolactone, tetrahydrofuran (THF), 2-methyltetrahydrofuran, diethylether, methyl-tert-butylether, succinonitrile (SN), glutaronitrile (GN), adiponitrile (AN), N,N-dimethylsulfamoyl fluoride (FSA), N,N-dimethyltrifluoromethane-sulfonamide (TFSA), ethyl methyl carbonate (EMC), dimethyl carbonate (DMC), propylene carbonate (PC), ethylene carbonate (EC), fluoroethylene carbonate (FEC), difluoroethylene carbonate (DFEC), and any mixtures thereof.

In the context of the invention, the term "NMC" refers to a lithium nickel manganese cobalt oxide material of formula LiNiₓMn_{y}Co_{z}O₂ wherein the sum of x, y and z is equal to1. The three integer numbers following NMC typically refer to the relative stoichiometries of Ni, Mn and Co respectively. Thus, the term NMC622 refers to a compound of formula LiNi_{0.6}Mn_{0.2}Co_{0.2}O_{2;} and NMC9xx refers to a material of formula LiNi_{0.9}Mn_{y}Co_{z}.O₂ wherein the sum of y and z is equal to 0.1.

In the context of the invention, the term "polymer electrolyte" refers to a material comprising a polymer material suitable for conducting ions, in particular lithium cations, via non-covalent interactions between the polymer chain and the ion. Suitable polymers for polymer electrolytes are known in the art and typically comprise a heteroatom such as halogen, O, N, S or P in the repeating unit of the polymer chain that is suitable for interacting with a lithium cation through a lone pair of the heteroatom.

In the context of the invention, the term "cross-linking agent" refers to a chemical compound comprising a plurality of functional groups, such as (meth)acrylate or cyanoacrylate, suitable for reacting with a plurality of molecules of a polymer or an oligomer, thus producing a reticulated polymer.

In the context of the invention, the term "acrylate" refers to a compound comprising a moiety of formula: 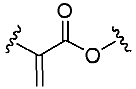 This term thus encompasses acrylate compounds, alkylacrylate compounds, such as methacrylate compounds, and cyanoacrylate compounds, among others.

In the context of the invention, the term "(meth)acrylate" refers either to an acrylate compound or to a methacrylate compound.

In the context of the invention, the term "alkyl" refers to a saturated aliphatic hydrocarbon chain having the number of atoms disclosed in the description and in the claims. Thus, "alkyl" may refer to methyl, ethyl, propyl, i-propyl, butyl, t-butyl, pentyl and hexyl, among others.

In the context of the invention, the term "fluoroalkyl" refers to a saturated aliphatic hydrocarbon chain having the number of atoms disclosed in the description and in the claims and wherein one or more of the hydrogen atoms are replaced by a fluorine atom. Thus, "fluoroalkyl" may refer to fluoromethyl, difluoromethyl, trifluoromethyl, pentafluoroethyl, 2,2,2-trifluoroethyl, 3,3,3-trifluoropropyl, 4,4,4-trifluorobutyl, 2,2-difluoroethyl, 3,3-difluoropropyl, 4,4-difluorobutyl and 2,2,3,4,4,4-hexafluorobutyl, among others.

As defined above, a first aspect of the invention relates to an electrochemical cell comprising:
(a) an anode comprising lithium metal;
(b) a cathode comprising a lithium nickel manganese cobalt oxide material of formula LiNiₓMn_{y}Co_{z}O₂ wherein x is from 0.70 to 0.95 and wherein the sum of x, y and z is equal to1; and
(c) a polymer electrolyte arranged for allowing the exchange of lithium cations between the anode and the cathode comprising:
   (i) a first lithium salt of formula (I) 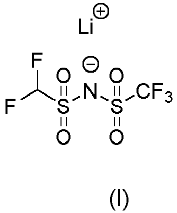
   (ii) a second lithium salt suitable for lithium metal battery electrolytes, and
   (iii) a polymer that is a cross-linked polymer of a monomer of formula (II) or a mixture thereof with a cross-linking agent of formula (III) or a mixture thereof 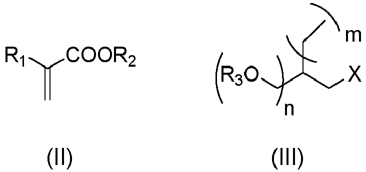 wherein:
      R₁ is selected from the group consisting of hydrogen, methyl and cyano;
      R₂ is a (C₁-C₆)alkyl group or a (C₁-C₆)fluoroalkyl group;
      n is 2 or 3;
      m is 0 or 1;
      the sum of n and m is equal to 3;
      each R₃ represents a group of formula (IV) 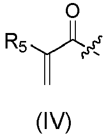
      wherein R₅ is selected from the group consisting of hydrogen, methyl and cyano; and the wavy line represents the attachment point of the group of formula (IV) to an oxygen atom bearing a R₃ group in the compound of formula (III);
      X is selected from methyl, a group of formula -OR₃ and a group of formula -OR₄ with the proviso that X is not a methyl group when m is 1;
      wherein R₄ is a group of formula (V) 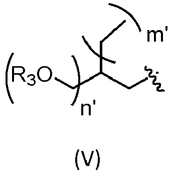
      wherein n' is 2 or 3;
      m' is 0 or 1;
      the sum of n' and m' is equal to 3 and wherein each R₃ represents a radical of formula (IV), the wavy line represents the attachment point of the group of formula (V) to the oxygen atom bearing the R₄ group in the -OR₄ group.

In a preferred embodiment of the first aspect of the invention, the cathode comprises a lithium nickel manganese cobalt oxide material of formula LiNiₓMn_{y}Co_{z}O₂ wherein x is selected from the group consisting of 0.70, 0.71, 0.72, 0.73, 0.74, 0.75, 0.76, 0.77, 0.78, 0.79, 0.80, 0.81, 0.82, 0.83, 0.84, 0.85, 0.86, 0.87, 0.88, 0.89, 0.90, 0.91, 0.92, 0.93, 0.94 and 0.95.

In a more preferred embodiment of the first aspect of the invention, the cathode comprises a lithium nickel manganese cobalt oxide material of formula LiNiₓMn_{y}Co_{z}O₂ wherein x is from 0.80 to 0.95 and the sum of x, y and z is equal to 1.

In an even more preferred embodiment of the first aspect of the invention, the cathode comprises a lithium nickel manganese cobalt oxide material of formula LiNiₓMn_{y}Co_{z}O₂ wherein x is from 0.85 to 0.95 and the sum of x, y and z is equal to 1.

In an even more preferred embodiment of the first aspect of the invention, the cathode comprises a lithium nickel manganese cobalt oxide material of formula LiNiₓMn_{y}Co_{z}O₂ wherein x is from 0.86 to 0.94 and the sum of x, y and z is equal to 1.

In an even more preferred embodiment of the first aspect of the invention, the cathode comprises a lithium nickel manganese cobalt oxide material of formula LiNiₓMn_{y}Co_{z}O₂ wherein x is from 0.87 to 0.93 and the sum of x, y and z is equal to 1.

In an even more preferred embodiment of the first aspect of the invention, the cathode comprises a lithium nickel manganese cobalt oxide material of formula LiNiₓMn_{y}Co_{z}O₂ wherein x is from 0.88 to 0.92 and the sum of x, y and z is equal to 1.

In an even more preferred embodiment of the first aspect of the invention, the cathode comprises a lithium nickel manganese cobalt oxide material of formula LiNiₓMn_{y}Co_{z}O₂ wherein x is from 0.89 to 0.91 and the sum of x, y and z is equal to 1.

In an even more preferred embodiment of the first aspect of the invention, the cathode comprises a lithium nickel manganese cobalt oxide material of formula LiNiₓMn_{y}Co_{z}O₂ wherein x is 0.90 and the sum of x, y and z is equal to 1.

In an even more preferred embodiment of the first aspect of the invention, the cathode comprises NMC9xx as cathode material.

In other preferred embodiments of the first aspect of the invention, the cathode further comprises a conductive carbon material, such as carbon powder, carbon black, graphite, graphene, reduced graphene oxide, carbon nanotubes, carbon fibers, carbon nanofibers or a mixture thereof.

In other preferred embodiments of the first aspect of the invention, the cathode further comprises a conductive carbon material that is carbon black.

In other preferred embodiments of the first aspect of the invention, the cathode further comprises a binder, such as polyvinylidenefluoride, carboxymethylcellulose, alginate, polyacrylic acid, polyacrylonitrile or a mixture thereof; prefrerably polyvinylidenefluoride.

In a further embodiment of the first aspect of the invention, the polymer electrolyte of the electrochemical cell is one wherein the first lithium salt of formula (I) is in an amount of between 5% and 40% in weight of the composition; preferably it is in an amount of between 5% and 15% in weight of the composition; even more preferably it is in an amount of between 8% and 12% in weight of the composition;. More preferably, the first lithium salt of formula (I) is in an amount of about 11.4% in weight of the composition, or of about 9.5% weight of the composition.

In a preferred embodiment of the first aspect of the invention, the polymer electrolyte of the electrochemical cell is one wherein the second lithium salt is inorganic or organic. Preferably, the second lithium salt is selected from the group consisting of lithium perchlorate, lithium nitrate, lithium tetrafluoroborate, lithium hexafluoroarsenate, lithium hexafluorophosphate, lithium chlorotrifluoroborate, lithium fluoride, lithium oxide, lithium peroxide, a salt of formula LiN(SO₂CF₃)₂, a salt of formula LiN(SO₂F)₂, a salt of formula LiN(SO₂CF₃)(SO₂F), a salt of formula LiN(SO₂C₂F₅)(SO₂F), a salt of formula LiB(C₂O₄)₂, a salt of formula LiBF₂(C₂O₄), a salt of formula LiC(SO₂CF₃)₃, a salt of formula LiPF₃(C₂F₅)₃, a salt of formula LiCF₃SO₃ and mixtures thereof.

In a more preferred embodiment of the first aspect of the invention, the polymer electrolyte of the electrochemical cell is one wherein the second lithium salt is not lithium fluoride. The skilled person will appreciate that this embodiment does not exclude the formation of lithium fluoride as component of a Solid Electrolyte Interface (SEI), e.g. by decomposition of LiDFTFSI, between the electrolyte and the anode of the battery, when said electrolyte is for use in a lithium metal battery.

Thus, in a more preferred embodiment of the first aspect of the invention, the polymer electrolyte of the electrochemical cell is one wherein the second lithium salt is selected from the group consisting of lithium perchlorate, lithium nitrate, lithium tetrafluoroborate, lithium hexafluoroarsenate, lithium hexafluorophosphate, lithium chlorotrifluoroborate, lithium oxide, lithium peroxide, a salt of formula LiN(SO₂CF₃)₂, a salt of formula LiN(SO₂F)₂, a salt of formula LiN(SO₂CF₃)(SO₂F), a salt of formula LiN(SO₂C₂F₅)(SO₂F), a salt of formula LiB(C₂O₄)₂, a salt of formula LiBF₂(C₂O₄), a salt of formula LiC(SO₂CF₃)₃, a salt of formula LiPF₃(C₂F₅)₃, a salt of formula LiCF₃SO₃ and mixtures thereof.

In a more preferred embodiment of the first aspect of the invention, the polymer electrolyte of the electrochemical cell is one wherein the second lithium salt is selected from the group consisting of lithium tetrafluoroborate, lithium hexafluoroarsenate, lithium hexafluorophosphate, lithium chlorotrifluoroborate, a salt of formula LiB(C₂O₄)₂, a salt of formula LiBF₂(C₂O₄), a salt of formula LiPF₃(C₂F₅)₃, a salt of formula LiCF₃SO₃ and mixtures thereof.

In another more preferred embodiment of the first aspect of the invention, the polymer electrolyte of the electrochemical cell is one wherein the second lithium salt is an organic lithium salt, that is selected from the group consisting of a salt of formula LiN(SO₂CF₃)₂, a salt of formula LiN(SO₂F)₂, a salt of formula LiN(SO₂CF₃)(SO₂F), a salt of formula LiN(SO₂C₂F₅)(SO₂F), a salt of formula LiB(C₂O₄)₂, a salt of formula LiBF₂(C₂O₄), a salt of formula LiC(SO₂CF₃)₃, a salt of formula LiPF₃(C₂F₅)₃, a salt of formula LiCF₃SO₃ and mixtures thereof.

In another preferred embodiment of the first aspect of the invention, the polymer electrolyte of the electrochemical cell is one wherein the second lithium salt is selected from a salt of formula LiB(C₂O₄)₂ that is lithium bis(oxalate)borate, a salt of formula LiBF₂(C₂O₄) that is lithium difluoro(oxalate)borate (LiDFOB) and a mixture thereof.

In another preferred embodiment of the first aspect of the invention, the polymer electrolyte of the electrochemical cell is one wherein the second lithium salt is a salt of formula LiB(C₂O₄)₂ that is lithium bis(oxalate)borate. In another preferred embodiment of the first aspect of the invention, the polymer electrolyte of the electrochemical cell is one wherein the second lithium salt is a salt of formula LiBF₂(C₂O₄) that is lithium difluoro(oxalate)borate (LiDFOB).

In a further embodiment of the first aspect of the invention, the polymer electrolyte of the electrochemical cell is one wherein the second lithium salt is in an amount of between 5% and 20% in weight of the composition; preferably, between 4% and 10% in weight of the composition; more preferably between 5% and 10% in weight of the composition.

In further preferred embodiments, the second lithium salt is in an amount of between 4% and 6% in weight of the composition; preferably it is of about 5.1% in weight of the composition. This is particularly the case when the second lithium salt is LiDFOB.

In further preferred embodiments, the second lithium salt is in an amount of between 7% and 10% in weight of the composition; preferably it is of about 8.2% in weight of the composition. This is particularly the case when the second lithium salt is LiBOB.

In a more preferred embodiment of the first aspect of the invention, the polymer electrolyte of the electrochemical cell is one wherein the weight ratio of the first lithium salt to the second lithium salt is comprised from 10:1 to 1:10; preferably it is comprised from 1:1 to 4:1; preferably it is comprised from 1:1 to 3:1 and more preferably it is comprised from 1:1 to 2:1.

In an even more preferred embodiment of the first aspect of the invention, the polymer electrolyte of the electrochemical cell is one wherein the weight ratio of the first lithium salt to the second lithium salt is of about 114:82. In an even more preferred embodiment of the first aspect of the invention, the polymer electrolyte of the electrochemical cell is one wherein the weight ratio of the first lithium salt to the second lithium salt is of about 95:51.

In a further preferred embodiment of the first aspect of the invention, the polymer electrolyte of the electrochemical cell is one wherein the lithium salts comprised in the polymer electrolyte composition represent from 5% to 90% in weight of the polymer electrolyte composition; preferably the lithium salts comprised in the polymer electrolyte composition represent from 5% to 60% in weight of the polymer electrolyte composition.

In a further more preferred embodiment of the first aspect of the invention, the polymer electrolyte of the electrochemical cell is one wherein the lithium salts comprised in the polymer electrolyte composition represent from 10% to 50% in weight of said composition.

In a further more preferred embodiment of the first aspect of the invention, the polymer electrolyte of the electrochemical cell is one wherein the lithium salts comprised in the polymer electrolyte composition represent from 10% to 30% in weight of said composition. In a further more preferred embodiment of the first aspect of the invention, the polymer electrolyte of the electrochemical cell is one wherein the lithium salts comprised in the polymer electrolyte composition represent from 12% to 22% in weight of the composition.

In a further more preferred embodiment of the first aspect of the invention, the polymer electrolyte of the electrochemical cell is one wherein the second lithium salt is lithium bis(oxalate)borate or lithium difluoro(oxalate)borate and:
- the weight ratio of the first lithium salt to the second lithium salt is comprised from 1:1 to 4:1; preferably it is comprised from 1:1 to 3:1 and more preferably it is comprised from 1:1 to 2:1; and/or
- the first lithium salt is present in an amount representing from 8% to 12% of the weight of the polymer electrolyte and the second lithium salt is present in an amount representing from 4% to 10% of the weight of the polymer electrolyte; and/or
- the lithium salts comprised in the polymer electrolyte composition represent from 10% to 50% in weight of the composition; preferably, the lithium salts comprised in the polymer electrolyte composition represent from 10% to 30% in weight of the composition; even more preferably, the lithium salts comprised in the polymer electrolyte composition represent from 12% to 22% in weight of the composition.

In a further more preferred embodiment of the first aspect of the invention, the polymer electrolyte of the electrochemical cell is one wherein the second lithium salt is lithium bis(oxalate)borate and:
- the weight ratio of the first lithium salt to the second lithium salt is comprised from 1:1 to 4:1; preferably it is comprised from 1:1 to 3:1 and more preferably it is comprised from 1:1 to 2:1; and/or
- the first lithium salt is present in an amount representing from 8% to 12% of the weight of the polymer electrolyte and the second lithium salt is present in an amount representing from 4% to 10% of the weight of the polymer electrolyte; preferably in an amount representing from 7% to 10% of the weight of the polymer electrolyte;; and/or
- the lithium salts comprised in the polymer electrolyte composition represent from 10% to 50% in weight of the composition; preferably, the lithium salts comprised in the polymer electrolyte composition represent from 10% to 30% in weight of the composition; even more preferably, the lithium salts comprised in the polymer electrolyte composition represent from 16% to 22% in weight of the composition.

In a further more preferred embodiment of the first aspect of the invention, the polymer electrolyte of the electrochemical cell is one wherein the second lithium salt is lithium difluoro(oxalate)borate LiBF₂(C₂O₄) (LiDFOB) and:
- the weight ratio of the first lithium salt to the second lithium salt is comprised from 1:1 to 4:1; preferably it is comprised from 1:1 to 3:1 and more preferably it is comprised from 1:1 to 2:1; and/or
- the first lithium salt is present in an amount representing from 8% to 12% of the weight of the polymer electrolyte and the second lithium salt is present in an amount representing from 4% to 10% of the weight of the polymer electrolyte; preferably in an amount representing from 4% to 6% of the weight of the polymer electrolyte; and/or
- the lithium salts comprised in the polymer electrolyte composition represent from 10% to 50% in weight of the composition; preferably, the lithium salts comprised in the polymer electrolyte composition represent from 10% to 30% in weight of the composition; even more preferably, the lithium salts comprised in the polymer electrolyte composition represent from 12% to 16% in weight of the composition.

In a further more preferred embodiment of the first aspect of the invention, the polymer electrolyte of the electrochemical cell is one wherein the polymer is a cross-linked polymer of a monomer of formula (II) as defined above or a mixture thereof with a cross-linking agent of formula (III) as defined above or a mixture thereof wherein, in the compound of formula (II), R₁ is hydrogen.

In a further more preferred embodiment of the first aspect of the invention, the polymer electrolyte of the electrochemical cell is one wherein the polymer is a cross-linked polymer of a monomer of formula (II) as defined above or a mixture thereof with a cross-linking agent of formula (III) as defined above or a mixture thereof wherein, in the compound of formula (II), R₂ is a (C₁-C₆)alkyl group; preferably R₂ is selected from *n-*propyl, n-butyl and n-pentyl. More preferably, R₂ is a *n*-butyl group.

In a further more preferred embodiment of the first aspect of the invention, the polymer electrolyte of the electrochemical cell is one wherein the polymer is a cross-linked polymer of a monomer of formula (II) as defined above or a mixture thereof with a cross-linking agent of formula (III) as defined above or a mixture thereof wherein, in the compound of formula (II), R₂ is a (C₁-C₆)fluoroalkyl group; preferably R₂ is selected from the group consisting of 2,2,2-trifluoroethyl, 3,3,3-trifluoropropyl, 4,4,4-trifluorobutyl, 2,2-difluoroethyl, 3,3-difluoropropyl, 4,4-difluorobutyl and 2,2,3,4,4,4-hexafluorobutyl; more preferably, R2 is 2,2,2-trifluoroethyl.

In a further more preferred embodiment of the first aspect of the invention, the polymer electrolyte of the electrochemical cell is one wherein the polymer is a cross-linked polymer of a monomer of formula (II) as defined above or a mixture thereof with a cross-linking agent of formula (III) as defined above or a mixture thereof wherein the compound of formula (II) is n-butyl acrylate.

In a further more preferred embodiment of the first aspect of the invention, the polymer electrolyte of the electrochemical cell is one wherein the polymer is a cross-linked polymer of a monomer of formula (II) as defined above or a mixture thereof with a cross-linking agent of formula (III) as defined above or a mixture thereof wherein, in each group of formula (IV) of the compound of formula (III), R₅ is hydrogen.

In a further more preferred embodiment of the first aspect of the invention, the polymer electrolyte of the electrochemical cell is one wherein the polymer is a cross-linked polymer of a monomer of formula (II) as defined above or a mixture thereof with a cross-linking agent of formula (III) as defined above or a mixture thereof wherein m is 0 and n is 3.

In a further more preferred embodiment of the first aspect of the invention, the polymer electrolyte of the electrochemical cell is one wherein the polymer is a cross-linked polymer of a monomer of formula (II) as defined above or a mixture thereof with a cross-linking agent of formula (III) as defined above or a mixture thereof wherein X is a group of formula -OR₃.

In a further more preferred embodiment of the first aspect of the invention, the polymer electrolyte of the electrochemical cell is one wherein the polymer is a cross-linked polymer of a monomer of formula (II) as defined above or a mixture thereof with a cross-linking agent of formula (III) that is selected from the group consisting of pentaerythritol tetraacrylate, pentaerythriol triacrylate, trimethylolpropane triacrylate, dipentaerythritol pentaacrylate, dipentaerythrirol hexaacrylate, di(trimethylolpropane) tetraacrylate and any mixture thereof.

In a further more preferred embodiment of the first aspect of the invention, the polymer electrolyte of the electrochemical cell is one wherein the polymer is a cross-linked polymer of a monomer of formula (II) as defined above or a mixture thereof with a cross-linking agent of formula (III) that is pentaerythritol tetraacrylate.

In a further more preferred embodiment of the first aspect of the invention, the polymer electrolyte of the electrochemical cell is one wherein the weight ratio of compound of formula (II) to compound of formula (III) is of between 1:1 and 3:1; more preferably of between 2:1 and 3:1.

In an even more preferred embodiment of the first aspect of the invention, the polymer electrolyte of the electrochemical cell is one wherein the weight ratio of compound of formula (II) to compound of formula (III) is of between 2:1 and 2.5:1; more preferably, it is of about 96:43 or of about 98:43.

In another preferred embodiment of the first aspect of the invention, the polymer electrolyte of the electrochemical cell is one wherein the polymer represents between 10% and 20% of the weight of the polymer electrolyte composition.

In a more preferred embodiment of the first aspect of the invention, the polymer electrolyte of the electrochemical cell is one wherein the polymer represents between 12% and 16% of the weight of the polymer electrolyte composition.

In a further more preferred embodiment of the first aspect of the invention, the polymer electrolyte of the electrochemical cell is one wherein the compound of formula (II) is n-butyl acrylate and the compound of formula (III) is pentaerythritol tetraacrylate.

In a further more preferred embodiment of the first aspect of the invention, the polymer electrolyte of the electrochemical cell is one wherein:
- the compound of formula (II) is n-butyl acrylate,
- the compound of formula (III) is pentaerythritol tetraacrylate, and
- the weight ratio of compound of formula (II) to compound of formula (III) is of between 2:1 and 3:1; preferably of between of between 2:1 and 2.5:1.

In a further more preferred embodiment of the first aspect of the invention, the polymer electrolyte of the electrochemical cell is one wherein:
- the compound of formula (II) is n-butyl acrylate,
- the compound of formula (III) is pentaerythritol tetraacrylate,
- the weight ratio of compound of formula (II) to compound of formula (III) is of between 2:1 and 3:1; preferably of between of between 2:1 and 2.5:1, and
- the polymer represents between 10% and 20% of the weight of the polymer electrolyte composition; preferably, between 12% and 16% of the weight of the polymer electrolyte composition.

In a further more preferred embodiment of the first aspect of the invention, the polymer electrolyte of the electrochemical cell is one wherein:
- the second lithium salt is lithium difluoro(oxalate)borate LiBF₂(C₂O₄) (LiDFOB);
- the weight ratio of the first lithium salt to the second lithium salt is comprised from 1:1 to 4:1; preferably it is comprised from 1:1 to 3:1 and more preferably it is comprised from 1:1 to 2:1;
- the lithium salts comprised in the polymer electrolyte composition represent from 10% to 50% in weight of the composition; preferably, the lithium salts comprised in the polymer electrolyte composition represent from 10% to 30% in weight of the composition; even more preferably, the lithium salts comprised in the polymer electrolyte composition represent from 12% to 16% in weight of the composition;
- the compound of formula (II) is n-butyl acrylate,
- the compound of formula (III) is pentaerythritol tetraacrylate,
- the weight ratio of compound of formula (II) to compound of formula (III) is of between 2:1 and 3:1; preferably of between of between 2:1 and 2.5:1, and
- the polymer represents between 10% and 20% of the weight of the polymer electrolyte composition; preferably, between 12% and 16% of the weight of the polymer electrolyte composition.

In a further more preferred embodiment of the first aspect of the invention, the polymer electrolyte of the electrochemical cell is one wherein:
- the second lithium salt is lithium bis(oxalate)borate;
- the weight ratio of the first lithium salt to the second lithium salt is comprised from 1:1 to 4:1; preferably it is comprised from 1:1 to 3:1 and more preferably it is comprised from 1:1 to 2:1;
- the lithium salts comprised in the polymer electrolyte composition represent from 10% to 50% in weight of the composition; preferably, the lithium salts comprised in the polymer electrolyte composition represent from 10% to 30% in weight of the composition; even more preferably, the lithium salts comprised in the polymer electrolyte composition represent from 16% to 22% in weight of the composition;
- the compound of formula (II) is n-butyl acrylate,
- the compound of formula (III) is pentaerythritol tetraacrylate,
- the weight ratio of compound of formula (II) to compound of formula (III) is of between 2:1 and 3:1; preferably of between of between 2:1 and 2.5:1, and
- the polymer represents between 10% and 20% of the weight of the polymer electrolyte composition; preferably, between 12% and 16% of the weight of the polymer electrolyte composition.

In a further preferred embodiment of the first aspect of the invention, the polymer electrolyte of the electrochemical cell further comprises a plasticizer. Particularly suitable are plasticizer compounds suitable for dissolving the lithium salts of the polymer electrolyte. Such solvents are known in the art and include ether solvents, nitriles, fluorinated sulfonamides, carbonate-based solvents or a combination thereof.

In a more preferred embodiment of the first aspect of the invention, the polymer electrolyte of the electrochemical cell further comprises a plasticizer selected from the group consisting of dimethoxy ethane (DME), 1,2-Diethoxyethane (DEE), 1,3-Dioxolane (DOL), Diethyleneglycol dimethyl ether (DEGDME), Triethylene glycol dimethyl ether (G3), tetraethylene glycol dimethyl ether (TEGDME), Poly(ethylene glycol) dimethyl ether (PEGDME), tetrahydropyran (THP), γ-butyrolactone, tetrahydrofuran (THF), 2-methyltetrahydrofuran, diethylether, methyl-tert-butylether, succinonitrile (SN), glutaronitrile (GN), adiponitrile (AN), N,N-dimethylsulfamoyl fluoride (FSA), N,N-dimethyltrifluoromethane-sulfonamide (TFSA), ethyl methyl carbonate (EMC), dimethyl carbonate (DMC), propylene carbonate (PC), ethylene carbonate (EC), fluoroethylene carbonate (FEC), difluoroethylene carbonate (DFEC), and any mixtures thereof.

In a more preferred embodiment of the first aspect of the invention, the polymer electrolyte of the electrochemical cell further comprises a plasticizer that is a carbonate-based solvent and is preferably selected from the group consisting of ethyl methyl carbonate (EMC), dimethyl carbonate (DMC), propylene carbonate (PC), ethylene carbonate (EC), fluoroethylene carbonate (FEC), difluoroethylene carbonate (DFEC), and any mixtures thereof.

In a more preferred embodiment of the first aspect of the invention, the polymer electrolyte of the electrochemical cell further comprises a plasticizer that is selected from the group consisting of ethyl methyl carbonate (EMC), ethylene carbonate (EC) and a mixture thereof; preferably, it is a mixture of ethyl methyl carbonate (EMC) and ethylene carbonate (EC).

When the plasticizer is a mixture of ethyl methyl carbonate (EMC) and ethylene carbonate (EC), the weight ratio of ethylene carbonate (EC) to ethyl methyl carbonate (EMC) is preferably comprised between 6:5 and 9:5. More preferably, said weight ratio is between 6:5 and 3:2; more preferably, it is of about 398:288 or of about 405:308.

In a more preferred embodiment of the first aspect of the invention, the polymer electrolyte of the electrochemical cell further comprises a plasticizer which represents from 5% to 95% in weight of the polymer electrolyte composition. More preferably, said plasticizer represents from 20% to 95% in weight of the polymer electrolyte composition. Even more preferably, said plasticizer represents from 40% to 95% in weight of the polymer electrolyte composition. Even more preferably, said plasticizer represents from 40% to 80%; more preferably from 65% to 95% in weight of the polymer electrolyte composition. Even more preferably, said plasticizer represents from 65% to 80% in weight of the polymer electrolyte composition.

In a more particular embodiment, the polymer electrolyte of the electrochemical cell of the first aspect of the invention further comprises a plasticizer which represents about 68.6% in weight of the composition. In another more particular embodiment, the polymer electrolyte of the electrochemical cell of the first aspect of the invention further comprises a plasticizer which represents about 71.3% in weight of the composition.

In a more particular embodiment, the polymer electrolyte of the electrochemical cell of the first aspect of the invention further comprises a plasticizer that is a mixture of ethyl methyl carbonate (EMC) and ethylene carbonate (EC) representing from 65% to 95% in weight of the polymer electrolyte composition.

In an even more particular embodiment, the polymer electrolyte of the electrochemical cell of the first aspect of the invention further comprises a plasticizer that is a mixture of ethyl methyl carbonate (EMC) and ethylene carbonate (EC) representing from 65% to 95% in weight of the polymer electrolyte composition and wherein the weight ratio of ethylene carbonate (EC) to ethyl methyl carbonate (EMC) is comprised between 6:5 and 9:5.

In a further more preferred embodiment of the first aspect of the invention, the polymer electrolyte of the electrochemical cell is one wherein:
- the second lithium salt is lithium difluoro(oxalate)borate LiBF₂(C₂O₄) (LiDFOB);
- the weight ratio of the first lithium salt to the second lithium salt is comprised from 1:1 to 4:1; preferably it is comprised from 1:1 to 3:1 and more preferably it is comprised from 1:1 to 2:1;
- the lithium salts comprised in the polymer electrolyte composition represent from 10% to 50% in weight of the composition; preferably, the lithium salts comprised in the polymer electrolyte composition represent from 10% to 30% in weight of the composition; even more preferably, the lithium salts comprised in the polymer electrolyte composition represent from 12% to 16% in weight of the composition;
- the compound of formula (II) is n-butyl acrylate,
- the compound of formula (III) is pentaerythritol tetraacrylate,
- the weight ratio of compound of formula (II) to compound of formula (III) is of between 2:1 and 3:1; preferably of between of between 2:1 and 2.5:1,
- the polymer represents between 10% and 20% of the weight of the polymer electrolyte composition; preferably, between 12% and 16% of the weight of the polymer electrolyte composition, and
- the polymer electrolyte further comprises a plasticizer that is a mixture of ethyl methyl carbonate (EMC) and ethylene carbonate (EC) representing from 65% to 95% in weight of the polymer electrolyte composition and wherein the weight ratio of ethylene carbonate (EC) to ethyl methyl carbonate (EMC) is comprised between 6:5 and 9:5.

In a further more preferred embodiment of the first aspect of the invention, the polymer electrolyte of the electrochemical cell is one wherein:
- the second lithium salt is lithium bis(oxalate)borate;
- the weight ratio of the first lithium salt to the second lithium salt is comprised from 1:1 to 4:1; preferably it is comprised from 1:1 to 3:1 and more preferably it is comprised from 1:1 to 2:1;
- the lithium salts comprised in the polymer electrolyte composition represent from 10% to 50% in weight of the composition; preferably, the lithium salts comprised in the polymer electrolyte composition represent from 10% to 30% in weight of the composition; even more preferably, the lithium salts comprised in the polymer electrolyte composition represent from 16% to 22% in weight of the composition;
- the compound of formula (II) is n-butyl acrylate,
- the compound of formula (III) is pentaerythritol tetraacrylate,
- the weight ratio of compound of formula (II) to compound of formula (III) is of between 2:1 and 3:1; preferably of between of between 2:1 and 2.5:1, and
- the polymer represents between 10% and 20% of the weight of the polymer electrolyte composition; preferably, between 12% and 16% of the weight of the polymer electrolyte composition and
- the polymer electrolyte further comprises a plasticizer that is a mixture of ethyl methyl carbonate (EMC) and ethylene carbonate (EC) representing from 65% to 95% in weight of the polymer electrolyte composition and wherein the weight ratio of ethylene carbonate (EC) to ethyl methyl carbonate (EMC) is comprised between 6:5 and 9:5.

In a further more preferred embodiment of the first aspect of the invention, the electrochemical cell is one wherein:
- the cathode comprises NMC9xx;
- the second lithium salt is lithium bis(oxalate)borate;
- the weight ratio of the first lithium salt to the second lithium salt is comprised from 1:1 to 4:1; preferably it is comprised from 1:1 to 3:1 and more preferably it is comprised from 1:1 to 2:1;
- the lithium salts comprised in the polymer electrolyte composition represent from 10% to 50% in weight of the composition; preferably, the lithium salts comprised in the polymer electrolyte composition represent from 10% to 30% in weight of the composition; even more preferably, the lithium salts comprised in the polymer electrolyte composition represent from 16% to 22% in weight of the composition;
- the compound of formula (II) is n-butyl acrylate,
- the compound of formula (III) is pentaerythritol tetraacrylate,
- the weight ratio of compound of formula (II) to compound of formula (III) is of between 2:1 and 3:1; preferably of between of between 2:1 and 2.5:1, and
- the polymer represents between 10% and 20% of the weight of the polymer electrolyte composition; preferably, between 12% and 16% of the weight of the polymer electrolyte composition and
- the polymer electrolyte further comprises a plasticizer that is a mixture of ethyl methyl carbonate (EMC) and ethylene carbonate (EC) representing from 65% to 95% in weight of the polymer electrolyte composition and wherein the weight ratio of ethylene carbonate (EC) to ethyl methyl carbonate (EMC) is comprised between 6:5 and 9:5.

In a further more preferred embodiment of the first aspect of the invention, the polymer electrolyte of the electrochemical cell is one wherein:
- the cathode comprises NMC9xx;
- the second lithium salt is lithium difluoro(oxalate)borate LiBF₂(C₂O₄) (LiDFOB);
- the weight ratio of the first lithium salt to the second lithium salt is comprised from 1:1 to 4:1; preferably it is comprised from 1:1 to 3:1 and more preferably it is comprised from 1:1 to 2:1;
- the lithium salts comprised in the polymer electrolyte composition represent from 10% to 50% in weight of the composition; preferably, the lithium salts comprised in the polymer electrolyte composition represent from 10% to 30% in weight of the composition; even more preferably, the lithium salts comprised in the polymer electrolyte composition represent from 12% to 16% in weight of the composition;
- the compound of formula (II) is n-butyl acrylate,
- the compound of formula (III) is pentaerythritol tetraacrylate,
- the weight ratio of compound of formula (II) to compound of formula (III) is of between 2:1 and 3:1; preferably of between of between 2:1 and 2.5:1,
- the polymer represents between 10% and 20% of the weight of the polymer electrolyte composition; preferably, between 12% and 16% of the weight of the polymer electrolyte composition, and
- the polymer electrolyte further comprises a plasticizer that is a mixture of ethyl methyl carbonate (EMC) and ethylene carbonate (EC) representing from 65% to 95% in weight of the polymer electrolyte composition and wherein the weight ratio of ethylene carbonate (EC) to ethyl methyl carbonate (EMC) is comprised between 6:5 and 9:5.

In a further more preferred embodiment of the first aspect of the invention, the polymer electrolyte of the electrochemical cell is one wherein:
- the first lithium salt is present in an amount representing from 8% to 12% of the weight of the polymer electrolyte;
- the second lithium salt is selected from the group consisting of a salt of formula LiB(C₂O₄)₂ and a salt of formula LiBF₂(C₂O₄) and is present in an amount representing from 4% to 10% of the weight of the polymer electrolyte; preferably, it is a salt of formula LiBF₂(C₂O₄) present in an amount representing from 4% to 6% of the weight of the polymer electrolyte;
- the compound of formula (II) is n-butyl acrylate,
- the compound of formula (III) is pentaerythritol tetraacrylate, and
- the weight ratio of compound of formula (II) to compound of formula (III) is of between 2:1 and 3:1; preferably of between of between 2:1 and 2.5:1.

In a further more preferred embodiment of the first aspect of the invention, the polymer electrolyte of the electrochemical cell is one wherein:
- the first lithium salt is present in an amount representing from 8% to 12% of the weight of the polymer electrolyte;
- the second lithium salt is selected from the group consisting of a salt of formula LiB(C₂O₄)₂ and a salt of formula LiBF₂(C₂O₄) and is present in an amount representing from 4% to 10% of the weight of the polymer electrolyte; preferably, it is a salt of formula LiBF₂(C₂O₄) present in an amount representing from 4% to 6% of the weight of the polymer electrolyte;
- the compound of formula (II) is n-butyl acrylate,
- the compound of formula (III) is pentaerythritol tetraacrylate,
- the weight ratio of compound of formula (II) to compound of formula (III) is of between 2:1 and 3:1; preferably of between of between 2:1 and 2.5:1, and
- the polymer represents between 10% and 20% of the weight of the polymer electrolyte composition; preferably, between 12% and 16% of the weight of the polymer electrolyte composition.

In a further more preferred embodiment of the first aspect of the invention, the polymer electrolyte of the electrochemical cell is one wherein:
- the cathode comprises NMC9xx;
- the first lithium salt is present in an amount representing from 8% to 12% of the weight of the polymer electrolyte;
- the second lithium salt is selected from the group consisting of a salt of formula LiB(C₂O₄)₂ and a salt of formula LiBF₂(C₂O₄) and is present in an amount representing from 4% to 10% of the weight of the polymer electrolyte; preferably, it is a salt of formula LiBF₂(C₂O₄) present in an amount representing from 4% to 6% of the weight of the polymer electrolyte;
- the compound of formula (II) is n-butyl acrylate,
- the compound of formula (III) is pentaerythritol tetraacrylate,
- the weight ratio of compound of formula (II) to compound of formula (III) is of between 2:1 and 3:1; preferably of between of between 2:1 and 2.5:1, and
- the polymer represents between 10% and 20% of the weight of the polymer electrolyte composition; preferably, between 12% and 16% of the weight of the polymer electrolyte composition.

In a further more preferred embodiment of the first aspect of the invention, the polymer electrolyte of the electrochemical cell is one wherein:
- the cathode comprises NMC9xx;
- the first lithium salt is present in an amount representing from 8% to 12% of the weight of the polymer electrolyte;
- the second lithium salt is selected from the group consisting of a salt of formula LiB(C₂O₄)₂ and a salt of formula LiBF₂(C₂O₄) and is present in an amount representing from 4% to 10% of the weight of the polymer electrolyte; preferably, it is a salt of formula LiBF₂(C₂O₄) present in an amount representing from 4% to 6% of the weight of the polymer electrolyte;
- the compound of formula (II) is n-butyl acrylate,
- the compound of formula (III) is pentaerythritol tetraacrylate,
- the weight ratio of compound of formula (II) to compound of formula (III) is of between 2:1 and 3:1; preferably of between of between 2:1 and 2.5:1,
- the polymer represents between 10% and 20% of the weight of the polymer electrolyte composition; preferably, between 12% and 16% of the weight of the polymer electrolyte composition, and
- the polymer electrolyte further comprises a plasticizer that is a mixture of ethyl methyl carbonate (EMC) and ethylene carbonate (EC) representing from 65% to 95% in weight of the polymer electrolyte composition and wherein the weight ratio of ethylene carbonate (EC) to ethyl methyl carbonate (EMC) is comprised between 6:5 and 9:5.

In a further more preferred embodiment of the first aspect of the invention, the polymer electrolyte of the electrochemical cell is one which further comprises a separator arranged between the anode and the cathode. Said separator is suitable for separating the anode from the cathode and avoid direct electrical contact between said electrodes while allowing the flow of lithium cations between the electrodes. Suitable materials and shapes of materials are well-known in the art and will become apparent to the skilled person upon reduction to practice of the invention.

In preferred embodiments, the material forming the separator is selected from the group consisting of a polyolefin such as polyethylene and/or polypropylene, polyesters, polyamides, cellulose and the like.

In other embodiments, the separator comprises a non-woven fabric forming a film or sheet.

In further embodiments, the separator comprises a porous membrane forming a film or sheet and comprising a plurality of layers of a polymer material selected from the group consisting of a polyolefin such as polyethylene and/or polypropylene, polyesters, polyamides, cellulose and the like.

In further embodiments, the separator comprises a porous membrane forming a film or sheet and comprising up to three layers of a polyolefin such as polyethylene and/or polypropylene.

In more preferred embodiments, the separator comprises a film of a polyolefin such as polyethylene and/or polypropylene; preferably polypropylene. Preferably, said film is microporous.

In more preferred embodiments, the separator comprises Celgard 2500^{®}.

The separator as defined above may be arranged in the electrochemical cell as defined in any of the embodiments defining the electrochemical cell of the first aspect of the invention described above.

As defined above, the second aspect of the invention relates to a method for the preparation of an electrochemical cell according to the first aspect of the invention comprising the steps of:
(i) providing a cathode comprising a lithium nickel manganese cobalt oxide material of formula LiNiₓMn_{y}Co_{z}O₂ as defined in the first aspect of the invention;
(ii) providing an anode comprising lithium metal;
(iii) providing a polymer electrolyte precursor composition comprising:
   (a) a first lithium salt of formula (I) as defined in the first aspect of the invention,
   (b) a second lithium salt suitable for lithium metal battery electrolytes as defined in the first aspect of the invention,
   (c) a polymer precursor composition comprising:
      (c-1) a monomer of formula (II) as defined in the first aspect of the invention or a mixture thereof,
      (c-2) a cross linking agent of formula (III) as defined in the first aspect of the invention or a mixture thereof, and
      (c-3) a free radical initiator;
   (d) optionally, a plasticizer as defined in the first aspect of the invention;
(iv) transferring the polymer electrolyte precursor composition provided in step (iii) on the surface of the cathode provided in step (i) and of the anode provided in step (ii), said surfaces being optionally covered with a separator; in a manner that the electrolyte is arranged between the cathode and the anode such that lithium cations can be exchanged between the cathode and the anode; and
(v) cross-linking the polymer precursor composition of the polymer electrolyte precursor composition transferred in step (iv).

In preferred embodiments of the second aspect of the invention, each one of the lithium nickel manganese cobalt oxide material, the cathode composition, the anode composition, the amount of the first lithium salt, the second lithium salt, the amount of the second lithium salt, the monomer of formula (II), the amount of the monomer of formula (II), the cross-linking agent of formula (III), the amount of the cross-linking agent of formula (III), the plasticizer, the amount of plasticizer and the separator are each independently as defined in any one of the embodiments described in the first aspect of the invention and defining each of these features.

Suitable free radical initiator of the polymer precursor composition are well known in the art and are those suitable for curing acrylate compositions. The skilled person will identify them upon reduction to practice of the invention. Said free radical initiator may in particular be selected from the group consisting of benzoin (C₁-C₄)alkylether, camphorquinone, Irgacure^{®}, phosphine oxides (TPO), azoisobutyronitrile and azobisdimethylvaleronitrile. The free radical initiator is typically present in an amount of from 0.1% to 0.5% of the weight of the polymer precursor composition. Preferably, the free radical initiator is azoisobutyronitrile and/or the amount of free radical initiator is of about 0.3% of the weight of the polymer precursor composition. Depending on the choice of the free-radical initiator, step (v) may be initiated thermally or by irradiation with light, such as UV-Vis irradiation. Thermal initiation, such as heating at 90 °C, is typically employed when the free radical initiator is azoisobutyronitrile.

Step (iv) may be carried out according to any method of transferring liquid compositions to the surface of solid substrates, including, casting and coating techniques. Step (iv) is preferably carried out by casting. Coating techniques include, among others, spin coating, spray coating, dip coating and roll coating.

As defined above, the invention also relates in a third aspect to a battery comprising a plurality of electrochemical cells as defined in the first aspect of the invention.

In preferred embodiments of the third aspect of the invention, each one of the lithium nickel manganese cobalt oxide material, the cathode composition, the anode composition, the amount of the first lithium salt, the second lithium salt, the amount of the second lithium salt, the monomer of formula (II), the amount of the monomer of formula (II), the cross-linking agent of formula (III), the amount of the cross-linking agent of formula (III), the plasticizer, the amount of plasticizer and the separator are each independently as defined in any one of the embodiments described in the first aspect of the invention and defining each of these features.

In certain embodiments of the third aspect of the invention, the electrochemical cells are connected in series, thus increasing the voltage of the battery.

In other embodiments of the third aspect of the invention, the electrochemical cells are connected in parallel, thus increasing the current capacity of the battery.

In further embodiments, the battery of the third aspect of the invention comprises a portion of electrochemical cells connected in series and a further portion of electrochemical cells connected in parallel.

In further embodiments, the battery of the third aspect of the invention is arranged as a multilayer pouch.

Throughout the description and claims the word "comprises" and variations of the word, are not intended to exclude other technical features, additives, components or steps. Furthermore, the word "comprise" encompasses the cases of "consist of" and "consists essentially of". Additional objects, advantages and features of the invention will become apparent to those skilled in the art upon examination of the description or may be learned by practice of the invention. The following examples are provided by way of illustration, and they are not intended to be limiting of the present invention.

### EXAMPLES

### List of abbreviations

- EC: ethylene carbonate
- EMC: ethylmethylcarbonate
- LiDFTFSI: (difluoromethanesulfonyl)(trifluoromethanesulfonyl)imide lithium salt
- LiBOB: lithium bis(oxalate)borate
- LiDFOB: Lithium difluoro(oxalate)borate
- PEGMA: poly(ethylene glycol) methyl ether methacrylate with Mₙ = 500 g/mol
- PEGDMA: poly(ethyleneglycol)dimethacrylate with Mₙ = 550 g/mol
- PETA: Pentaerythritol tetraacrylate
- BA: Butyl acrylate
- AIBN: azoisobutyronitrile
- rpm: rounds per minute
- RT: room temperature
- PVdF: polyvinylidene difluoride

### Example 1: preparation of polymer gel electrolytes precursor compositions

Polymer gel electrolytes having the compositions (expressed in weight %) disclosed in Table 1 have been prepared according to the following general procedure. In a first step, a mixture of EC and EMC was prepared by weighing the appropriate amounts of EC and EMC. LiDFTFSI and LiBOB or LiDFOB were weighted in a vial and the mixture of EC and EMC was added in an appropriate amount. PEGDMA, PEGMA, BA, and/or PETA were then added to the solution in the appropriate amount and the resulting mixture was left stirring until obtaining a homogeneous solution (approx. 2 h at 300 rpm and RT). AIBN (0.3 wt% of the total weight of the electrolyte) was then added to the solution and the resulting mixture was left stirring 10 min at 300 rpm.

**Table 1**

| Compound | Comparative Electrolyte a | Electrolyte b | Electrolyte c |
|---|---|---|---|
| EC | 39.2 | 39.8 | 40.5 |
| EMC | 28.3 | 28.8 | 30.8 |
| LiDFTFSI | 11.2 | 11.4 | 9.5 |
| LiBOB | 8.1 | 8.2 | N/A |
| LiDFOB | N/A | N/A | 5.1 |
| PEGDMA | 3.9 | N/A | N/A |
| PEGMA | 11.4 | N/A | N/A |
| PETA | N/A | 4.3 | 4.3 |
| BA | N/A | 9.6 | 9.8 |

### Example 2: preparation of lithium metal batteries comprising polymer gel electrolytes

Lithium metal batteries comprising the polymer gel electrolytes of Example 1 have been prepared according to the following procedure:
*Cathode preparation:* Three cathodes were prepared.

In a first place, a comparative cathode composed of 95 wt.% of NMC622 (LiNi_{0.6}Mn_{0.2}Co_{0.2}O₂, purchased from Targray), 3 wt. % of conductive carbon (Super C-65), and 2 wt.% of polymeric binder (PVdF) was prepared. The slurry was made using N-methyl-2-pyrrolidone (NMP) as solvent and after homogenization of the dispersion it was cast on an aluminum current collector. Finally, it was dried at 80-120 °C leading to an average loading of ca. 3.0 mAh/cm².

In a second instance, a cathode composed of 96 wt.% of NMC9xx (LiNi_{0.9}MnₓCo_{y}O₂, purchased from Umicore and used as received from supplier), 2 wt. % of conductive carbon (Super C-65), and 2 wt.% of polymeric binder (PVdF) was prepared. The slurry was made using N-methyl-2-pyrrolidone (NMP) as solvent and after homogenization of the dispersion it was cast on an aluminum current collector. Finally, it was dried at 80-120 °C leading to an average loading of ca. 3.0 mAh/cm².

In a third instance, LiFePO₄ (LFP, from Bay International) comparative cathodes with an average loading of 3.0 mAh/cm² and composed of LFP Active Material 96.5wt%, CNT 0.5wt%, Super P 1wt%, and PVDF Binder 2wt% were prepared as follows: A slurry of the solid components was made using N-methyl-2-pyrrolidone (NMP) as solvent and after homogenization of the dispersion it was cast on an aluminum current collector. Finally, it was dried at 80-120 °C leading to an average loading of ca. 3.0 mAh/cm².

*Anode provision:* Li metal disk (China Energy Lithium, 14 mm diameter and 50 µm thickness) and Li metal foil (China Energy Lithium, 50 µm thickness).

*Cell assembly:* Coin cells were assembled in an Argon filled glovebox using LFP, NMC622 or NMC9XX (12 mm diameter) electrodes as cathode and prepared as defined above, Celgard 2500 as separator and Li metal disk (China Energy Lithium, 14 mm diameter and 50 µm thickness) as anode. Previously prepared precursor electrolyte solutions of Example 1 was cast on the separator and the cell was closed with a crimper. Then, after allowing 24 hours of wetting at RT, the thermal crosslinking process was applied by keeping the cell at 90 °C for 12 hours.
Following this method, the following batteries have been prepared:
1. battery 1 (comparative), comprising NMC9xx based cathode and Comparative Electrolyte a
2. battery 2, comprising NMC9xx based cathode and Electrolyte b
3. battery 3, comprising NMC9xx based cathode and Electrolyte c
4. battery 4 (comparative), comprising NMC622 based cathode and Electrolyte c
5. battery 5(comparative), comprising LFP based cathode and Electrolyte c

Multilayer pouch cells with a total capacity of 1 Ah were assembled in a dry room with a dew point of -60 °C by stacking 9 double-side cathodes of NMC9xx, 2 single-side cathodes of NMC9xx, and 8 lithium metal anodes, isolated among them by Celgard 2500^{®}. After assembly, the pouch cell was then filled with the previously prepared electrolyte solution of Electrolyte C allowing 24 hours of wetting at RT. Afterwards, the crosslinking process was applied by keeping the cell at 90 °C for 12 hours. Following this method, the battery 6 was prepared.

The charge retention capacity of the prepared batteries was tested by cycling galvanostatically at 40 °C using a Maccor Battery Tester (Series 4000) as follows:
Batteries 1, 2 and 3: 4.3 V - 3.0 V @40 °C C/20-D/20, C/10-D/10x2, [C/10-D/5x1, C/5-D/2×9] × ∞
   During formation, the first cycle consisted in charging at C/20 until 4.3V and then discharging at C/20 until 3.0V, during the subsequent 2 formation cycles, the battery was charged at C/10 until 4.3V and then discharged at C/10 until 3.0 V. Following formation, the cell was cycled by charging at C/5 to 4.3V and discharging at C/2 to 3.0V with one capacity check-up cycle (Reference Performance Test cycle) every 10 cycles where the battery was charged at C/10 to 4.3V and then discharged at C/5 to 3.0V in order to measure the state of health of the battery.
Battery 4: 4.25 V - 3.0 V @40 °C C/20-D/20, C/10-D/10x2, [C/10-D/5x1, C/5-D/2×9] × ∞
   During formation, the first cycle consisted in charging at C/20 until 4.25V and then discharging at C/20 until 3.0V, during the subsequent 2 formation cycles, the battery was charged at C/10 until 4.25 V and then discharged at C/10 until 3.0 V. Following formation, the cell was cycled by charging at C/5 to 4.25 V and discharging at C/2 to 3.0 V with one capacity check-up cycle (Reference Performance Test cycle) every 10 cycles where the battery was charged at C/10 to 4.25 V and then discharged at C/5 to 3.0 V in order to measure the state of health of the battery.
Battery 5: 3.8 V - 2.5 V @40 °C C/20-D/20, C/10-D/10x2, [C/10-D/5x1, C/5-D/2x9] × ∞
   During formation, the first cycle consisted in charging at C/20 until 3.80 V and then discharging at C/20 until 2.5 V, during the subsequent 2 formation cycles, the battery was charged at C/10 until 3.80 V and then discharged at C/10 until 2.5 V. Following formation, the cell was cycled by charging at C/5 to 3.80 V and discharging at C/2 to 2.5 V with one capacity check-up cycle (Reference Performance Test cycle) every 10 cycles where the battery was charged at C/10 to 3.80 V and then discharged at C/5 to 2.5 V in order to measure the state of health of the battery.
Battery 6: 4.3 V - 3.0 V @40 °C C/20-D/20, C/10-D/10x2, [C/5-D/2x4, C/10-D/5x1] × ∞
   During formation, the first cycle consisted in charging at C/20 until 4.3 V and then discharging at C/20 until 3.0 V, during the subsequent 2 formation cycles, the battery was charged at C/10 until 4.3 V and then discharged at C/10 until 3.0 V. Following formation, the cell was cycled by charging at C/5 to 4.3 V and discharging at C/2 to 3.0 V with one capacity check-up cycle (Reference Performance Test cycle) every 5 cycles where the battery was charged at C/10 to 4.3 V and then discharged at C/5 to 3.0 V in order to measure the state of health of the battery.

The results of Figure 1 show that batteries comprising NMC9xx and a polymer electrolyte according to the invention surprisingly exhibit higher specific discharge capacity and coulombic efficiency than battery 1 (comparative electrolyte), which comprises a polymer electrolyte comprising a cross-linked polymer of PEGDMA and PEGMA. The Coulombic efficiency is expressed as a percentage and is calculated as the ratio of discharge capacity to charge capacity

The results of Figure 2 show that batteries comprising NMC9xx and a polymer electrolyte according to the invention surprisingly exhibit higher capacity retention and coulombic efficiency than battery 1 (comparative electrolyte), which comprises a polymer electrolyte comprising a cross-linked polymer of PEGDMA and PEGMA. The capacity retention is expressed as a percentage and is calculated as the ratio of the discharge capacity at a given cycle number to the discharge capacity of cycle 1.

The results of Figure 3 show that batteries comprising NMC9xx and a polymer electrolyte according to the invention surprisingly exhibit higher specific discharge capacity and coulombic efficiency than batteries 4 and 5 (comparative cathode materials), which comprise, respectively, NMC622 and LFP as cathode active materials.

## Claims

1. Electrochemical cell comprising:
(a) an anode comprising lithium metal;
(b) a cathode comprising a lithium nickel manganese cobalt oxide material of formula LiNiₓMn_{y}Co_{z}O₂ wherein x is from 0.70 to 0.95 and wherein the sum of x, y and z is equal to1; and
(c) a polymer electrolyte arranged for allowing the exchange of lithium cations between the anode and the cathode comprising:
(i) a first lithium salt of formula (I) 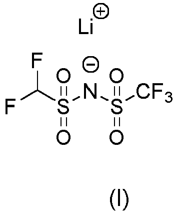
(ii) a second lithium salt suitable for lithium metal battery electrolytes, and
(iii) a polymer that is a cross-linked polymer of a monomer of formula (II) or a mixture thereof with a cross-linking agent of formula (III) or a mixture thereof 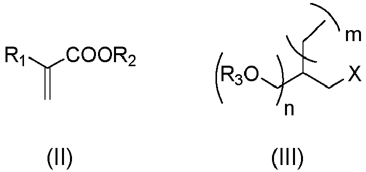 wherein:
R₁ is selected from the group consisting of hydrogen, methyl and cyano;
R₂ is a (C₁-C₆)alkyl group or a (C₁-C₆)fluoroalkyl group;
n is 2 or 3;
m is 0 or 1;
the sum of n and m is equal to 3;
each R₃ represents a group of formula (IV) 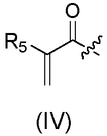
wherein R₅ is selected from the group consisting of hydrogen, methyl and cyano; and the wavy line represents the attachment point of the group of formula (IV) to an oxygen atom bearing a R₃ group in the compound of formula (III);
X is selected from methyl, a group of formula -OR₃ and a group of formula -OR₄ with the proviso that X is not a methyl group when m is 1;
wherein R₄ is a group of formula (V) 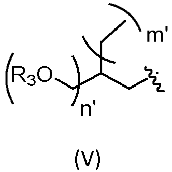
wherein n' is 2 or 3;
m' is 0 or 1;
the sum of n' and m' is equal to 3 and wherein each R₃ represents a radical of formula (IV), the wavy line represents the attachment point of the group of formula (V) to the oxygen atom bearing the R₄ group in the -OR₄ group.

2. Electrochemical cell according to claim 1 wherein the lithium nickel manganese cobalt oxide material of formula LiNiₓMn_{y}Co_{z}O₂ is NMC9xx.

3. Electrochemical cell according to any one of claims 1 to 2 wherein the second lithium salt is selected from the group consisting of a salt of formula LiB(C₂O₄)₂ and a salt of formula LiBF₂(C₂O₄); preferably it is a salt of formula LiBF₂(C₂O₄).

4. Electrochemical cell according to any one of claims 1 to 3 wherein the weight ratio of the first lithium salt to the second lithium salt is comprised from 10:1 to 1:10 and/or the sum of the weights of the first and second lithium salts represent from 5% to 90% of the weight of the polymer electrolyte; preferably, the weight ratio of the first lithium salt to the second lithium salt is comprised from 1:1 to 2:1 and/or the sum of the weights of the first and second lithium salts represent from 10% to 30% of the weight of the polymer electrolyte.

5. Electrochemical cell according to any one o claims 1 to 4 wherein R₁ is hydrogen.

6. Electrochemical cell according to any one claims 1 to 5 wherein R₂ is a butyl group.

7. Electrochemical cell according any one of claims 1 to 6 wherein, in each group of formula (IV), R₅ is hydrogen.

8. Electrochemical cell according any one of claims 1 to 7 wherein X is a group of formula -OR₃.

9. Electrochemical cell according any one of claims 1 to 8 wherein the weight ratio of the monomer of formula (II) to the cross-linking agent of formula (III) is comprised from 1:1 to 3:1 and/or the cross-linked polymer represents from 10% to 20% of the weight of the polymer electrolyte.

10. Electrochemical cell according any one of claims 1 to 9 wherein the polymer electrolyte further comprises a plasticizer.

11. Electrochemical cell according to claim 10 wherein the plasticizer represents between 40% and 80% in weight of the composition and/or wherein the plasticizer is a mixture of ethylene carbonate (EC) and ethyl methyl carbonate (EMC); preferably in a weight ratio of EC to EMC of between 6:5 and 9:5.

12. Electrochemical cell according any one of claims 1 to 11 wherein the polymer electrolyte is one wherein:
(i) the lithium nickel manganese cobalt oxide material of formula LiNiₓMn_{y}Co_{z}O₂ is NMC9xx;
(ii) the first lithium salt is present in an amount representing from 8% to 12% of the weight of the polymer electrolyte;
(iii) the second lithium salt is selected from the group consisting of a salt of formula LiB(C₂O₄)₂ and a salt of formula LiBF₂(C₂O₄) and is present in an amount representing from 4% to 10% of the weight of the polymer electrolyte; preferably, it is a salt of formula LiBF₂(C₂O₄) present in an amount representing from 4% to 6% of the weight of the polymer electrolyte;
(iv) the polymer is a cross-linked polymer of butyl acrylate and pentaerythritol tetraacrylate whereby the weight ratio of butyl acrylate to pentaerythritol tetraacrylate is comprised from 2:1 to 25:10, said polymer representing from 12% to 16% of the polymer electrolyte; and
(v) the polymer electrolyte further comprises a plasticizer that is a mixture of ethylene carbonate (EC) and ethyl methyl carbonate (EMC) in a weight ratio of EC to EMC comprised from 6:5 to 9:5; said the plasticizer representing between 65% and 95% in weight of the polymer electrolyte.

13. Electrochemical cell according any one of claims 1 to 12 further comprising a separator arranged between the anode and the cathode; preferably said separator comprises a film of microporous polypropylene.

14. A method for the preparation of an electrochemical cell according to any one of claims 1 to 13 comprising the steps of:
(i) providing a cathode comprising a lithium nickel manganese cobalt oxide material of formula LiNiₓMn_{y}Co_{z}O₂ wherein x is from 0.90 to 0.95 and wherein the sum of x, y and z is equal to1;
(ii) providing an anode comprising lithium metal;
(iii) providing a polymer electrolyte precursor composition comprising:
(a) a first lithium salt of formula (I) as defined in claim 1,
(b) a second lithium salt suitable for lithium metal battery electrolytes as defined in any one of claims 1 to 12,
(c) a polymer precursor composition comprising:
(c-1) a monomer of formula (II) as defined in any one of claims 1 to 12 or a mixture thereof,
(c-2) a cross linking agent of formula (III) as defined in any one of claims 1 to 12 or a mixture thereof, and
(c-3) a free radical initiator;
(d) optionally, a plasticizer as defined in any one of the claims 10 to 12;
(iv) transferring the polymer electrolyte precursor composition provided in step (iii) on the surface of the cathode provided in step (i) and of the anode provided in step (ii), said surfaces being optionally covered with a separator; in a manner that the electrolyte is arranged between the cathode and the anode such that lithium cations can be exchanged between the cathode and the anode; and
(v) cross-linking the polymer precursor composition of the polymer electrolyte precursor composition transferred in step (iv).

15. A battery comprising a plurality of electrochemical cells as defined in any one of claims 1 to 13.
